# EUROPEAN PATENT SPECIFICATION

(11) **EP 0 408 124 B1**
(45) Date of publication and mention of the grant of the patent: **28.09.1994**
(21) Application number: 90201804.3
(22) Date of filing: 05.07.1990
(51) Int. Cl.: H02H 9/04

(54) **Circuit for protection against negative overvoltages across the power supply of an integrated circuit comprising a power device with related control circuit**
Schutzschaltung gegen negative Überspannungen über der Stromversorgung einer integrierten Schaltung mit einer Leistungseinrichtung und seinem Regelkreis
Circuit de protection contre des surtensions négatives sur l'alimentation d'un circuit intégré comprenant un dispositif de puissance et son circuit de commande

(30) Priority: 11.07.1989 IT 2115089
(43) Date of publication of application: 16.01.1991
(73) Proprietor: SGS-THOMSON MICROELECTRONICS s.r.l., 20041 Agrate Brianza (Milano) (IT)
(72) Inventor: Palara, Sergio, I-95021 Acicastello, (Catania) (IT)
(74) Representative: Mittler, Enrico

(56) References cited:
- EP-A- 0 083 060
- US-A- 4 471 237
- US-A- 4 499 673
- US-A- 4 808 839

## Description

The present invention relates to a circuit for protection against negative overvoltages across the power supply terminals of an integrated circuit comprising a power device with related control circuit, the power device being connected between a ground terminal of the integrated circuit and a node to be connected to a load.

It is well known that power devices, together with the related control circuits, are used for driving loads of various types. If it is an inductive load, as in the case of a power device used in motor car applications, the cut-offs of the power device determine positive overvoltages across the power device itself which are normally absorbed by means of appropriate limiting devices such as zener diodes. It can, however, occur that such positive overvoltages across the power device combine with negative overvoltages across the terminals of the power supply, say, a motor vehicle's battery. In such cases, if the power device and the related control circuit are in the form of an integrated circuit, a parasitic transistor formed between the collector of the power device and a power supply terminal can burn out.

The object of the present invention is to provide the integrated circuit with an adequate protection against the drawbacks due to such negative overvoltages.

According to the invention such object is attained with a protection circuit, characterized in that it comprises a switch sensitive to negative overvoltages across the power supply terminals and a limiter for limiting the voltage across the power device, said switch being arranged to enable said limiter upon the occurrence of a negative overvoltage across the power supply terminals.

In this way, whenever a negative overvoltage across the power supply combines with a positive overvoltage across the power device, the latter is suitably limited, thus safeguarding the parasitic transistor formed, as already said, in the integrated circuit.

The features of the present invention shall be made more evident by the following detailed description of some of its embodiments illustrated as non-limiting examples in the enclosed drawings, wherein:
Fig. 1 illustrates a protection circuit according to the invention for a power device and related control circuit;
Fig. 2 represents the same circuit of Fig. 1 wherein the limiter has a darlington configuration;
Fig. 3 represents a modification of the circuit of Fig. 1;
Fig. 4 illustrates the circuit of Fig. 3 wherein the voltage limiting circuit has been modified;
Fig. 5 illustrates an embodiment of the circuit in the MOS technology.

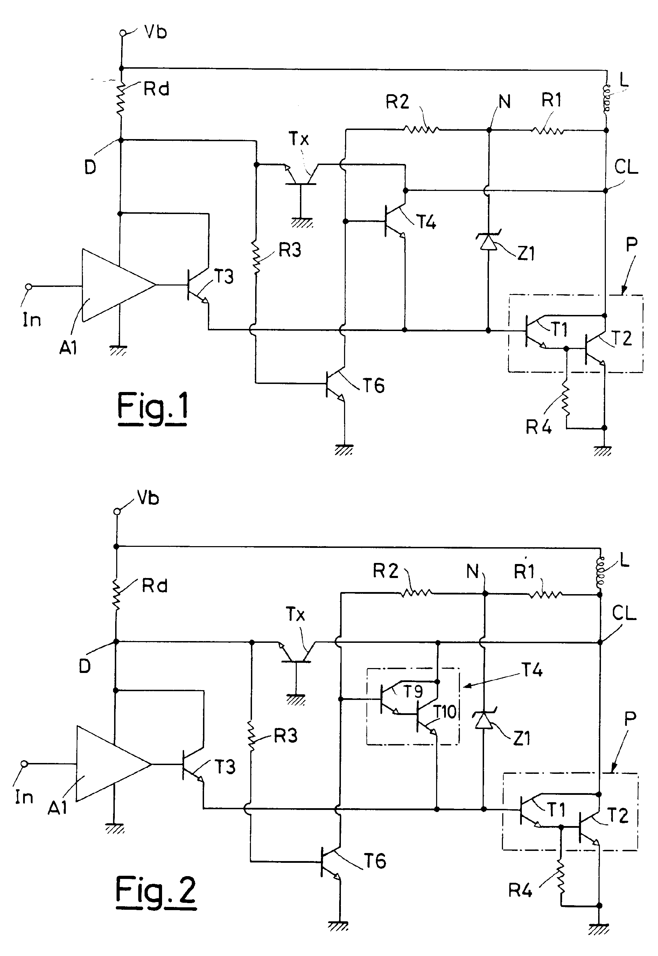

With reference to Fig. 1, a load L is driven by a power device P, which comprises two transistors T1 and T2, respectively, in a darlington configuration supplied with a voltage Vb and driven by a transistor T3, whose base is connected to the output of a control circuit constituted by a driver amplifier A1 suitable for receiving an input signal In. The collector of said transistor T3 is connected to a circuit node D, in turn connected to the power supply of amplifier A1 and, by means of a resistance Rd, to the power supply source Vb, while the emitter is connected to the base of transistor T1. A resistor R4 connects the base of transistor T2 to the emitter of the same transistor T2 and to ground. With the power device, between the collector and the base of transistor T1, there is associated a voltage limiter, comprising a transistor T4, which has the collector connected to a circuit node CL in turn connected to the collector of transistor T1, the emitter connected to the base of transistor T1 and the base connected, on one side, to the collector of transistor T1 through a series of resistors R2, R1, an intermediate node of which is connected to the base of transistor T1 through a clamp zener diode Z1, on the other side to the collector of a bipolar transistor T6 suitable for activating and blocking transistor T4. Said transistor T6 has the emitter grounded and the base connected to the circuit node D through a resistor R3.

The construction of the circuit of Fig. 1 in the form of an integrated circuit determines, in a known way, the formation of a parasite transistor Tx, which has the collector connected to the collector of transistor T4, the base connected to ground and the emitter connected to the circuit node D.

As shown in Fig. 2, it is possible to use two transistors T9, T10 in darlington configuration as transistor T4, with the object of reducing the voltage across the load.

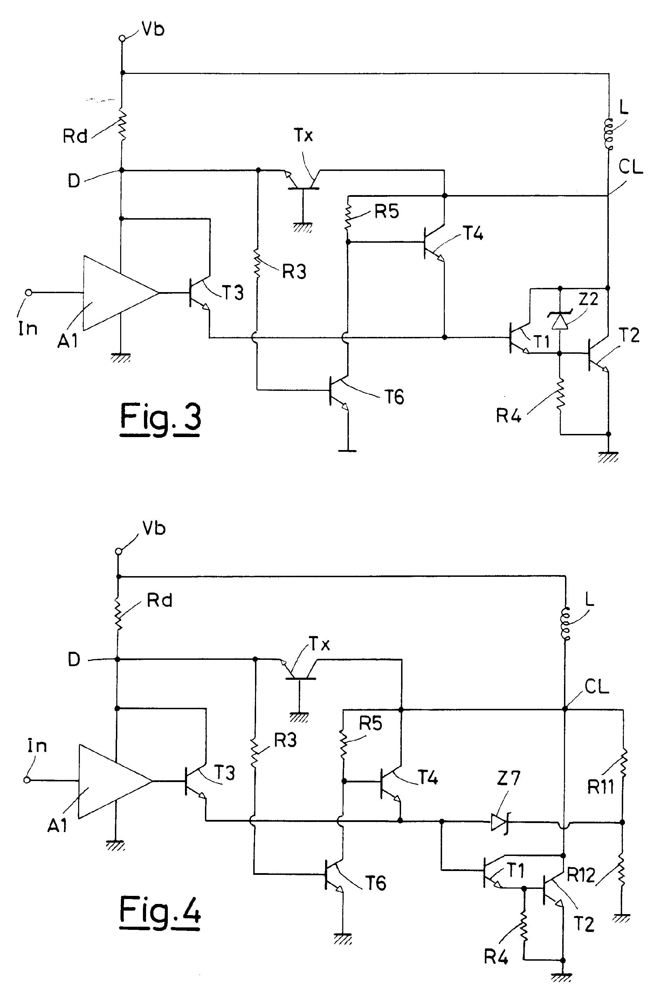

As illustrated in Fig. 3, it is possible to modify the circuits of Fig. 1, 2 by the introduction of a clamp zener diode Z2 integrated directly into the power device in a darlington configuration. In such a case zener Z1 is not present. It is also possible to replace transistors T4, T6 with NPN darlingtons.

The protection circuit according to the invention, essentially constituted by transistors T4 and T6, is applicable for any clamp circuit used, as is seen in the further example of Fig. 4, obtained starting with the circuit of Fig. 3 removing zener Z2 from the power circuit in a darlington configuration and introducing zener Z7 between the base of transistor T1 and a node intermediate between a series of resistances R11, R12.

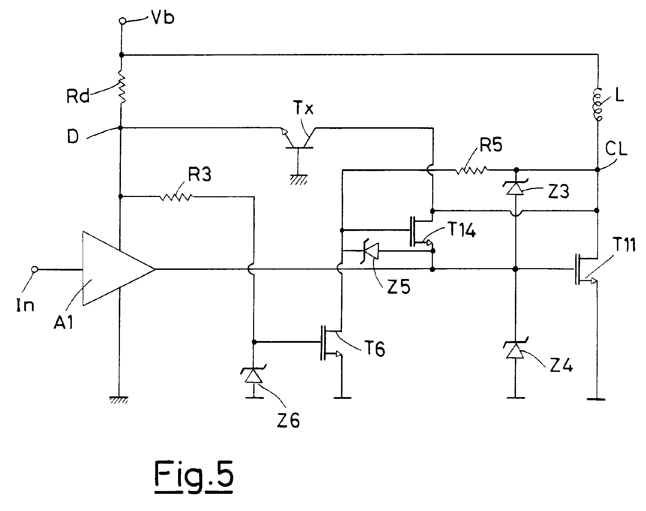

Fig. 5 illustrates an embodiment in the MOS technology. In particular the power device is shown with an MOS transistor T11, gate driven by amplifier A1 and having the source connected to ground and the drain connected to the load L at the node CL. In parallel to transistor T11 there is a series of two zeners Z3 and Z4; in particular Z3 connects the drain of transistor T11 to the corresponding gate, Z4 is on one side connected to the gate of transistor T11 and at the other side it is connected to ground. To the gate of the power device, transistor T11, there is connected the source of an MOS transistor T14, which forms part of a voltage limiter and has the drain in common with said power device T11. Between the source and the gate of transistor T14 there is a zener Z5; in addition, the gate and he drain of the same are connected together through a resistor R5. The gate of transistor T14 is connected to the drain of transistor T6, still with a switching function and also in the MOS version. The source of transistor T6 is connected to ground, the gate is connected through a series of resistors R3, Rd to the power supply source Vb. To the gate of transistor T6 there is connected a zener Z6 which is grounded at the other side. Parasite transistor Tx has the collector connected to the drain of transistor T14, the emitter connected to a node intermediate between resistors Rd and R3 and the base connected to ground.

With reference to Fig. 1, the protection circuit operates as follows. When the supply voltage Vb is positive, transistor T6 is kept saturated through resistance R3, which activates its base. Thus the collector of T6 is at a voltage Vast which is very low and T4 is blocked. As a consequence, coincidental with the cut-offs of the power device controlled by the control circuit on the input In, there is established in the node CL a positive overvoltage set by zener Z1, by resistances R1, R2 and by darlington T1, T2. If in such a condition (darlington off) there is a negative supply overvoltage Vb, the latter cuts off transistor T6 as it is no longer supplied through resistor R3. T4 enters into conduction, since its base is connected to the node CL by the series of resistances R1, R2. The emitter of T4 switches on output darlington T1, T2, which limits its own collector voltage and thus the voltage across node CL. There is thus limited in this way the current and as a consequence the dissipation of power through parasite transistor Tx whose emitter, connected to the power supply Vb, is subjected to the negative overvoltage and whose collector is connected to node CL. Thus transistor Tx remains intact.

As illustrated in Fig. 2 it is possible to reduce said voltage across the load at node CL by replacing transistor T4 with two transistors T9, T10 in a darlington configuration.

Transistor T4 may possibly be missing and its function is then executed by the clamp zener diode Z1.

As illustrated in Fig. 3 provision can be made for the introduction of a clamp zener Z2 directly integrated in darlington T1, T2, to replace zener Z1.

It is possible, as illustrated in Fig. 4, to modify the voltage limiting circuit. Such a variant provides for the grounding of resistor R12 and the introduction of a resistor R5 between the collector and the base of transistor T4.

The operation described is also applicable to the case of the embodiment in the MOS technology as illustrated in Fig. 5. In particular, when there is a positive power supply voltage, the voltage across the load, at the node CL, is determined solely by zener Z3. When there is a negative voltage across the battery, T6 is blocked, T11 is blocked. The voltage across the load, at the node CL, tends to rise sharply, triggering T14 through R5 which activates the gate of T11 which enters into conduction and limits its own drain voltage. The voltage across the load at node CL is thus limited.

## Claims

1. Circuit for protection against negative overvoltages across the power supply terminals of an integrated circuit comprising a power device (T1, T2; T11) with related control circuit (A1), the power device being connected between a ground terminal of the integrated circuit and a node (CL) to be connected to a load (L), characterized in that it comprises a switch (T6) sensitive to negative overvoltages across the power supply terminals and a limiter (T4, Z1; T14) for limiting the voltage across the power device (T1, T2; T11), said switch (T6) being arranged to enable said limiter (T4, Z1 ; T14) upon the occurrence of a negative overvoltage across the power supply terminals.

2. Protection circuit according to claim 1, characterized in that the switch (T6) comprises a transistor having its base connected to a power supply terminal.

3. Protection circuit according to claim 1, characterized in that the limiter (T4, Z1; T14) of the voltage across the power device (T1, T2; T11) comprises a transistor device (T4; T14) controlled by said switch (T6), said transistor device (T4; T14) being arranged to control the conduction of said power device (T1, T2; T11).

4. Protection circuit according to claim 3, characterized in that said transistor device (T4) comprises transistors (T9, T10) arranged in a darlington configuration.

5. Protection circuit according to claim 1, characterized in that said voltage limiter (T4, Z1) comprises a zener diode (Z1) interposed between a terminal of the power device (T1, T2 ; T11) to be connected to a load (L) and a control terminal of the power device (T1, T2; T11).

## Patentansprüche

1. Schutzschaltung gegen negative Überspannungen an den Versorgungsspannungsanschlüssen einer integrierten Schaltung, umfassend ein Leistungsbauelement (T1, T2; T11) mit zugehöriger Steuerschaltung (A1), wobei das Leistungsbauelement zwischen einen Masseanschluß der integrierten Schaltung und einen an eine Last (L) anzuschließenden Knoten (CL) angeschlossen ist,
**dadurch gekennzeichnet**, daß die Schaltung einen Schalter (T6) aufweist, der auf negative Überspannungen an den Spannungsversorgungsanschlüssen anspricht, und einen Begrenzer (T4, Z1; T14) zum Begrenzen der Spannung an dem Leistungsbauelement (T1, T2; T11) aufweist, wobei der Schalter (T6) derart angeordnet ist, daß er den Begrenzer (T4, Z1; T14) beim Auftreten einer negativen Überspannung an den Spannungsversorgungsanschlüssen aktiviert.

2. Schutzschaltung nach Anspruch 1,
**dadurch gekennzeichnet**, daß der Schalter (T6) einen Transistor aufweist, der mit seiner Basis an einen Spannungsversorgungsanschluß angeschlossen ist.

3. Schutzschaltung nach Anspruch 1,
**dadurch gekennzeichnet**, daß der Begrenzer (T4, Z1; T14) der Spannung an dem Leistungsbauelement (T1, T2; T11) ein Transistorbauelement (T4; T14) aufweist, welches von dem Schalter (T6) gesteuert wird, wobei das Transistorbauelement (T4; T14) derart ausgebildet ist, daß es den Leitungszustand des Leistungsbauelements (T1, T2; T11) steuert.

4. Schutzschaltung nach Anspruch 3,
**dadurch gekennzeichnet**, daß das Transistorbauelement (T4) Transistoren (T9, T4) aufweist, die eine Darlington-Schaltung bilden.

5. Schutzschaltung nach Anspruch 1,
**dadurch gekennzeichnet**, daß der Spannungsbegrenzer (T4, Z1) eine Zenerdiode (Z1) aufweist, die zwischen einen Anschluß des Leistungsbauelements (T1, T2; T11), der an eine Last (L) anzuschließen ist, und einen Steueranschluß des Leistungsbauelements (T1, T2; T11) geschaltet ist.

## Revendications

1. Circuit de protection à l'encontre de surtensions négatives sur les bornes d'alimentation d'un circuit intégré comprenant un dispositif de puissance (T1, T2 ; T11) avec un circuit de commande associé (A1), le dispositif de puissance étant connecté entre une borne de masse du circuit intégré et un noeud (CL) à connecter à une charge (L), caractérisé en ce qu'il comprend un commutateur (T6) sensible à des surtensions négatives sur les bornes d'alimentation et un limiteur (T4, Z1 ; T14) pour limiter la tension aux bornes du dispositif de puissance (T1, T2 ; T11), ledit commutateur (T6) étant disposé pour valider le limiteur (T4, Z1 ; T14) par suite de l'apparition d'une surtension négative sur les bornes d'alimentation.

2. Circuit de protection selon la revendication 1, caractérisé en ce que le commutateur (T6) comprend un transistor dont la base est connectée à une borne d'alimentation.

3. Circuit de protection selon la revendication 1, caractérisé en ce que le limiteur (T4, Z1 ; T14) de tension aux bornes du dispositif de puissance (T1, T2, T11) comprend un dispositif à transistor (T4 ; T14) commandé par le commutateur (T6), ce dispositif à transistor (T4, T14) étant disposé pour commander la conduction du dispositif de puissance (T1, T2 ; T11).

4. Circuit de protection selon la revendication 3, caractérisé en ce que le dispositif à transistor (T4) comprend des transistors (T9, T10) disposés en configuration Darlington.

5. Circuit de protection selon la revendication 1, caractérisé en ce que le limiteur de tension (T4, Z1) comprend une diode zener (Z1) interposée entre une borne du dispositif de puissance (T1, T2 ; T11) à connecter à une charge (L) et une borne de commande du dispositif de puissance (T1, T2, T11).
